# FASCICULE DE BREVET EUROPEEN

(11) **EP 1 971 564 B1**
(45) Date de publication et mention de la délivrance du brevet: **14.03.2018**
(21) Numéro de dépôt: 06842129.6
(22) Date de dépôt: 08.12.2006
(51) Int. Cl.: B23K 35/02, C04B 37/02, F01D 9/02, F02K 1/78, F02K 1/82, F02K 3/10, F23R 3/00

(54) **ASSEMBLAGE ENTRE UNE PIECE METALLIQUE ET UNE PIECE EN MATERIAU CERAMIQUE A BASE DE SIC ET/OU DE C.**
VERBINDUNG ZWISCHEN EINEM METALLTEIL UND EINEM KERAMIKTEIL AUF BASIS VON SIC UND/ODER C
JOINT BETWEEN A METAL PART AND A CERAMIC PART BASED SIC AND/OR C

(30) Priorité: 08.12.2005 FR 0553790
(43) Date de publication de la demande: 24.09.2008
(73) Titulaire: SNECMA, 75015 Paris (FR); Commissariat à l'Énergie Atomique et aux Énergies Alternatives, 75015 Paris (FR); INSTITUT NATIONAL POLYTECHNIQUE DE GRENOBLE, 38031 Grenoble Cédex 1 (FR)
(72) Inventeur: BENOIT, Joël Michel, F-77240 Cesson La Foret (FR); FROMENTIN, Jean-François, F-77240 Cesson La Foret (FR); CHAUMAT, Valérie, F-38760 Saint Paul De Varces (FR); GILLIA, Olivier, F-38360 Sassenage (FR); EUSTATHOPOULOS, Nikolas, F-38100 Grenoble (FR); HODAJ, Fiqiri, F-38100 Grenoble (FR); KOLTSOV, Alexey, Moscou, 127591 (RU)
(74) Mandataire: Intès, Didier Gérard André
(86) Numéro de dépôt international: PCT/FR2006/051318
(87) Numéro de publication internationale: WO 2007/066052

(56) Documents cités:
- EP-A- 1 028 476
- EP-A- 1 479 656
- WO-A-01/68560
- FR-A- 2 806 405
- US-A- 3 813 759
- US-A- 4 723 862
- US-A- 5 447 683
- US-A- 5 836 505
- US-A1- 2004 191 558
- PATENT ABSTRACTS OF JAPAN vol. 1995, no. 09, 31 octobre 1995 (1995-10-31) & JP 07 149578 A (SAGA PREF GOV), 13 juin 1995 (1995-06-13)
- PATENT ABSTRACTS OF JAPAN vol. 2002, no. 06, 4 juin 2002 (2002-06-04) & JP 2002 043482 A (NGK INSULATORS LTD), 8 février 2002 (2002-02-08)
- PINGUET N ET AL: "Structural chemistry, magnetism and electrical properties of binary Pr-silicides" JOURNAL OF ALLOYS AND COMPOUNDS ELSEVIER SWITZERLAND, vol. 348, 13 janvier 2003 (2003-01-13), pages 1-11, XP004396782 ISSN: 0925-8388
- BOUTAREK N ET AL: "Metallurgical and physical study of praseodymium disilicides and digermanides" JOURNAL OF ALLOYS AND COMPOUNDS SWITZERLAND, vol. 204, février 1994 (1994-02), pages 251-260, XP002468135 ISSN: 0925-8388
- MESCHEL S V ET AL: "Standard enthalpies of formation of some carbides, silicides, germanides and borides of holmium by high temperature direct synthesis calorimetry" JOURNAL OF ALLOYS AND COMPOUNDS ELSEVIER SWITZERLAND, vol. 247, no. 1-2, 30 janvier 1997 (1997-01-30), pages 52-56, XP004049800 ISSN: 0925-8388

## Description

L'invention se rapporte à un assemblage entre une pièce métallique et une pièce en matériau céramique à base de carbure de silicium (SiC) et/ou de carbone (C).

Cette invention trouve une application privilégiée dans le domaine de l'aéronautique, pour l'assemblage d'une pièce en alliage métallique réfractaire, comme un alliage à base de nickel (Ni) ou de cobalt (Co), et d'une pièce en matériau composite à matrice céramique, ou pièce CMC. Plus particulièrement, les pièces CMC concernées comprennent une matrice à base de SiC, de C ou une matrice dite "mixte" de C et de SiC, renforcée par des fibres de SiC et/ou de C. Ladite matrice peut être monophasée (par exemple entièrement en SiC) ou multiphasée (elle peut contenir, par exemple, au moins une autre phase à propriété auto-cicatrisante telle que décrite dans le document FR 2 732 338).

Les pièces CMC sont utilisées dans les turboréacteurs d'avion en remplacement des pièces mécaniques les plus exposées thermo-mécaniquement, car elles conservent de bonnes propriétés mécaniques à hautes températures, nécessitent un refroidissement moindre, et sont généralement plus légères.

Un problème se pose toutefois pour fixer ces pièces en matériau céramique aux pièces métalliques qui les environnent.

Parmi les techniques d'assemblage utilisées à ce jour, on trouve l'assemblage mécanique classique, de type rivetage ou boulonnage. Ce type d'assemblage se révèle souvent inadapté pour des raisons d'encombrement, de masse et/ou de mauvais comportement dynamique.

On connaît par ailleurs des techniques d'assemblage par brasage pour assembler deux pièces en matériau céramique, entre elles. Toutefois, ces techniques sont difficilement utilisables pour braser ensemble une pièce en matériau céramique et une pièce métallique, en raison des comportements thermo-mécaniques et physico-chimiques très différents des matériaux céramique et métallique. En particulier, on se trouve confronté à une différence de dilatation très importante entre les pièces en présence.

En effet, le coefficient de dilatation d'un alliage métallique est souvent deux à cinq fois supérieur à celui des matériaux céramiques utilisés. Ainsi, lors du refroidissement consécutif à la fusion de la composition de brasure, le retrait relatif de la pièce métallique engendre une zone en compression, respectivement en traction, dans les zones adjacentes au joint de brasure de la pièce en matériau céramique, respectivement de la pièce métallique. Il s'ensuit une flexion de l'ensemble faisant naître des contraintes pouvant être à l'origine de la rupture de l'une des pièces, généralement la pièce en matériau céramique qui est la plus fragile, et une mauvaise tenue du joint de brasure du fait de sa déformation localisée.

En outre, en raison de la forte réactivité de C ou de SiC vis-à-vis des métaux (plus particulièrement des métaux de transition), on constate généralement la formation de composés chimiques fragiles de type carbures ou siliciures entre les pièces céramique et métallique. Ces composés fragiles augmentent la fragilité de l'assemblage. US 4 723 862 A divulgue une structure multicouches pour assemblage d'une pièce métallique et d'une pièce céramique.

L'invention a pour but de pallier ces inconvénients, ou tout au moins de les atténuer, en proposant un assemblage qui permette, d'une part, de compenser l'écart de dilatation entre une pièce métallique et une pièce en matériau céramique à base de SiC et/ou de C et, d'autre part, d'éviter ou de limiter la formation de composés chimiques indésirables.

Ce but est atteint grâce à un assemblage selon l'invention comportant une structure empilée comprenant les éléments suivants assemblés deux à deux, dans cet ordre, par brasage :
- ladite pièce métallique ;
- une première pièce intercalaire ;
- une deuxième pièce intercalaire ; et
- ladite pièce en matériau céramique à base de SiC et/ou de C, cet assemblage étant tel que :
- la deuxième pièce intercalaire est réalisée en un autre matériau céramique (i.e. un matériau céramique différent de celui de ladite pièce en matériau céramique), cet autre matériau céramique étant chimiquement moins réactif vis-à-vis des métaux que SiC ou C, et présentant un coefficient de dilatation inférieur à celui du matériau constitutif de ladite pièce métallique ; et
- la première pièce intercalaire est métallique et apte à se déformer pour compenser l'écart de dilatation entre ladite pièce métallique et la deuxième pièce intercalaire.

On notera que ladite pièce céramique peut être une pièce en SiC massif ou une pièce CMC du type précédemment décrit.

L'invention propose donc d'intercaler entre les pièces céramique et métallique deux pièces intercalaires ayant des fonctions distinctes.

La première pièce intercalaire permet de compenser, en se déformant, les écarts de dilatation entre les pièces céramique et métallique.

Selon un premier mode de réalisation de la première pièce intercalaire, celle-ci est composée d'une couche de matériau métallique ductile. Dans ce cas, la pièce présente généralement une structure massive et forme un coussin de matière apte à se déformer par cisaillement. Parmi les matériaux ductiles susceptibles d'être utilisés, on peut citer le nickel, le palladium, l'or, ou des alliages comprenant ces différents métaux. Avantageusement, pour les applications aéronautiques qui nécessitent des assemblages réfractaires, on choisit les alliages à base de nickel, ceux-ci présentant une bonne tenue à haute température et un coût limité.

Selon un deuxième mode de réalisation de la première pièce intercalaire, ladite déformation est obtenue en choisissant une structure déformable pour cette pièce. Cette structure peut, par exemple, être à ressort à spirale ou à soufflet. La pièce n'est alors pas nécessairement en matériau ductile. Pour garantir de bonnes propriétés mécaniques et une bonne tenue en température, cette pièce peut être réalisée en alliage à base de Ni ou de Co.

La deuxième pièce intercalaire vise à protéger chimiquement ladite pièce en matériau céramique en empêchant l'attaque de celle-ci par la brasure liquide utilisée, qui comprend généralement des métaux réactifs vis-à-vis de SiC ou de C. Ainsi, on intercale entre la pièce en matériau céramique et les pièces métalliques de l'assemblage la deuxième pièce intercalaire, réalisée en un autre matériau céramique, moins réactif vis-à-vis des métaux (plus particulièrement des métaux de transition), l'AIN ou mullite. Avantageusement, la deuxième pièce intercalaire présente une rigidité et/ou une résistance à la rupture plus élevée que celle de la pièce en matériau céramique. La rigidité de la deuxième pièce intercalaire permet de former un appui rigide pour la première pièce intercalaire, ce qui assure la déformation de cette dernière, et permet d'atténuer les contraintes mécaniques s'exerçant sur la pièce en matériau céramique. Sa résistance à la rupture permet de garantir la bonne tenue mécanique de l'assemblage. La deuxième pièce intercalaire permet ainsi de protéger mécaniquement la pièce en matériau céramique qui, par nature, est généralement fragile.

Avantageusement, la deuxième pièce intercalaire présente un coefficient de dilatation suffisamment proche de celui de la pièce en matériau céramique, afin de limiter les écarts de dilatation entre ces pièces.

Compte tenu des conditions mécaniques et chimiques que doit vérifier la deuxième pièce intercalaire, on réalise celle-ci en mullite (un oxyde) ou en nitrure d'aluminium AIN (un nitrure). La mullite est un silicate d'alumine, composé défini de formule (3Al₂O₃, 2SiO₂) pouvant être obtenu par chauffage de silice en présence d'alumine. Pour les applications aéronautiques qui nécessitent des assemblages réfractaires, la mullite et l'AlN sont particulièrement intéressants en raison de leur bonne tenue en température et de leur bonne tenue à l'oxydation. Pour d'autres applications, l'alumine (Al₂O₃) peut être utilisée.

Avantageusement, la première composition de brasure utilisée pour assembler la première pièce intercalaire à la pièce métallique et/ou à la deuxième pièce intercalaire, est à base de Ni et comprend une proportion atomique de Ti inférieure à ou de l'ordre de 10%. De préférence, cette première composition comprend également les éléments suivants : Fe, Cr et Si. Les compositions de brasure comprenant les éléments Ni, Fe, Cr, Si et Ti seront notées ci-après NiFeCrSiTi.

Différentes compositions de brasures à base de Ni, dites réactives (parce qu'elles donnent naissance à de nouveaux composés chimiques intermétalliques), sont déjà connues mais dans le cas présent, la proportion de Ti doit être limitée car cet élément présente une forte réactivité vis-à-vis de la deuxième pièce intercalaire, ce qui conduirait à la naissance de phases intermétalliques fragiles.

Ainsi, ladite première composition de brasure comprend, de préférence, en pourcentages atomiques : entre 3 et 6% (préférentiellement entre 3,5 et 5,5%) de Ti lorsque la deuxième pièce intercalaire est en AIN, et entre 6 et 10% de Ti lorsque la deuxième pièce intercalaire est en mullite.

Avantageusement, la deuxième composition de brasure utilisée pour assembler la deuxième pièce intercalaire en AlN ou en mullite à la pièce en matériau céramique à base de SiC et/ou de C, est un alliage à base de Si.

Selon une première alternative, cette deuxième composition de brasure comprend essentiellement, en pourcentages atomiques : 60% à 97% de silicium Si et 40 à 3% de zirconium Zr et, de préférence, il s'agit d'un mélange eutectique de siliciure de zirconium ZrSi₂ et de Si.

L'utilisation d'un mélange ZrSi₂-Si pour braser une pièce en matériau céramique à base de SiC avec une pièce en mullite, est connue et décrite dans le document WO 03/037823.

L'utilisation de ZrSi₂-Si présente l'inconvénient suivant : la température de liquidus d'un mélange eutectique ZrSi₂-Si est d'environ 1370°C, température généralement supérieure à la température de début de fusion à des alliages métalliques aéronautiques utilisés pour la pièce métallique et/ou la première pièce intercalaire (par exemple, la température de début de fusion de l'alliage "Hastelloy X", décrit plus loin, est de 1310°C).

Pour réaliser l'assemblage de l'invention il est donc nécessaire d'effectuer deux cycles thermiques successifs de montée et descente en température : un premier cycle effectué typiquement jusqu'à 1400°C pour réaliser l'assemblage de la pièce en matériau céramique à la deuxième pièce intercalaire ; et un second cycle effectué typiquement jusqu'à 1250°C, température supérieure à la température de liquidus de la première composition de brasure, mais à laquelle lesdits alliages métalliques aéronautiques ne se dégradent pas. Ce second cycle permet de réaliser l'assemblage final en assemblant les pièces métalliques entre elles, c'est-à-dire la pièce métallique de base et la première pièce intercalaire métallique, et avec les pièces en matériaux céramiques, c'est-à-dire la seconde pièce intercalaire et la pièce en matériau céramique à base de SiC et/ou de C.

Selon une deuxième alternative, la deuxième composition de brasure est constituée essentiellement par un mélange de siliciure de praséodyme (PrSi₂) et de Si, dans lequel le silicium (Si) est majoritaire et le praséodyme (Pr) est minoritaire, en proportions atomiques. Une telle composition de brasure est nouvelle et peut être utilisée plus généralement pour l'assemblage par brasage de deux pièces, l'une des pièces étant en céramique à base de SiC et/ou de C et l'autre pièce étant en céramique à base de SiC, de C, d'AIN ou de mullite.

Avantageusement, ledit mélange de PrSi₂ et de Si comprend, en pourcentages atomiques 78% à 97% de Si et 22 à 3% de Pr et, de préférence, consiste en un mélange eutectique de PrSi₂ et de Si.

Lorsque la proportion atomique du mélange de PrSi₂ et de Si est proche de l'eutectique, c'est-à-dire de l'ordre de 81 à 85% de Si et 19 à 15% de Pr, la température de fusion de la composition de brasure PrSi₂-Si est relativement basse et on peut réaliser l'assemblage en procédant à un brasage de l'ensemble des pièces de l'assemblage en une seule étape.

On notera que la température de liquidus d'un mélange eutectique de PrSi₂ et de Si est d'environ 1212°C, et donc d'environ 158°C inférieure à la température de liquidus d'un mélange eutectique de ZrSi₂ et de Si.

Dans le cas où la proportion atomique du mélange de PrSi₂ et de Si est moins proche de l'eutectique, notamment entre 78 et 81% de Si et 22 à 19% de Pr, ou entre 85 et 97% de Si et 15 à 3% de Pr, il faudra alors procéder en deux étapes, comme détaillé ci-dessus, pour éviter la fusion des pièces métalliques.

Grâce à la composition de brasure PrSi₂-Si, il est donc possible de braser ensemble toutes les pièces de l'assemblage, en une seule étape, à une température supérieure aux températures de liquidus desdites première et deuxième compositions de brasure, mais qui reste suffisamment faible pour ne pas dégrader les alliages en présence. L'invention a également pour objet un procédé d'assemblage par brasage à l'aide d'une telle composition.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 représente schématiquement un assemblage selon un premier mode de réalisation de l'invention ;
- la figure 2 représente schématiquement un assemblage selon un deuxième mode de réalisation de l'invention ; et
- la figure 3 représente schématiquement un assemblage selon un troisième mode de réalisation de l'invention.

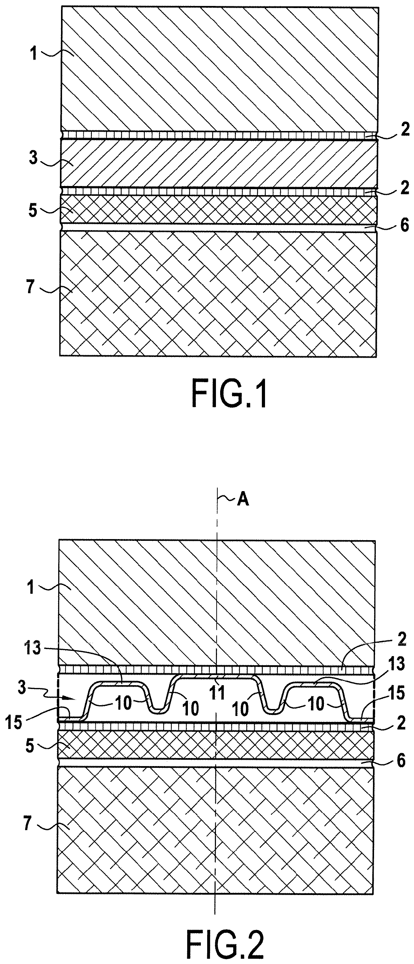

Selon un premier exemple d'assemblage selon l'invention, représenté sur la figure 1, celui-ci comprend :
- une pièce métallique 1 réalisée en un alliage de base Ni comme celui commercialisé sous la marque déposée "Hastelloy X" comprenant, en pourcentages en poids : au plus 0,5 % d'Al ; au plus 0,008 % de B ; 0,05 % à 0,15 % de C ; 20,5 % à 23 % de Cr ; 0,5 % à 2,5 % de Co ; au plus 0,5 % de Cu ; 17 à 20 % de Fe ; au plus 1 % de Mn ; 8 à 10 % de Mo ; au plus 0,04 % de P ; au plus 1 % de Si ; au plus 0,03 % de S ; au plus 0,15 % de Ti ; 0,2 à 1 % de W et un solde en Ni ;
- une première pièce intercalaire 3 réalisée en alliage à base de Ni, par exemple un alliage commercialisé sous la marque déposée "Inconel 600", "Inconel 601", "Inconel 625" ou "Nimonic 80A". Un alliage de type "Inconel 625" comprend typiquement, en pourcentages en poids : au plus 0,4% d'Al ; au plus 0,1% de C ; 20 à 23% de Cr ; au plus 1 % de Co ; au plus 5% de Fe ; au plus 0,5% de Mn ; 8 à 10% de Mo ; 3,15 à 4,15% de Niobium Nb ; au plus 0,015% de P ; au plus 0,5% de Si ; au plus 0,015% de S ; au plus 0,4% de Ti ; et un solde en Ni.
- une deuxième pièce intercalaire 5 réalisée en AIN ; et
- une pièce composite à matrice céramique 7 (CMC), à base de SiC.

La première composition de brasure 2 utilisée pour braser la pièce métallique 1 à la première pièce intercalaire 3 et pour braser la première pièce intercalaire 3 à la deuxième pièce intercalaire 5 est de type NiFeCrSiTi et comprend essentiellement (i.e. aux impuretés près), en pourcentages massiques : 2,8% de Fe ; 7% de Cr ; 6,2% de Si ; 4,5% de Ti et un solde en Ni.

La deuxième composition de brasure 6 utilisée pour braser la deuxième pièce intercalaire 5 à la pièce en matériau céramique 7 est un mélange eutectique de Zr₂Si et de Si.

Le procédé d'assemblage des pièces métallique 1 et céramique 7 comprend deux cycles thermiques de montée et descente en température, et comprend essentiellement les étapes suivantes :
- la deuxième composition de brasure 6 est disposée sur les surfaces à assembler de la pièce en matériau céramique 7 et de la deuxième pièce intercalaire 5 ;
- l'ensemble ainsi formé (pièces 5 et 7 et composition 6) est monté en température au-delà de la température de liquidus de la deuxième composition de brasure 6, puis refroidi ;
- la première composition de brasure 2 est disposée sur les surfaces à assembler des première et deuxième pièces intercalaires 3 et 5 et de la pièce métallique 1; et
- le nouvel ensemble ainsi formé (pièces 5, 7, 3 et 1, compositions 2 et 6) est monté en température au-delà de la température de liquidus de la première composition de brasure 2, puis refroidi.

Voici un exemple détaillé d'un tel procédé : les surfaces des parties des pièces 5 et 7 à assembler, respectivement en AIN et en CMC, sont dégraissées dans un solvant organique par exemple du type acétone, ester, éther, alcool ou un mélange de ceux-ci. Les surfaces des parties des pièces 7 et 5 sont enduites de la suspension de la deuxième composition de brasure 6, formée d'un mélange eutectique de ZrSi₂ et de Si. Les parties au voisinage du joint CMC / AIN sont recouvertes d'une suspension dite anti-mouillant non mouillable par ladite composition. Cette suspension évite l'écoulement de la composition de brasure hors du joint CMC / AIN. L'ensemble ainsi formé, prêt à être brasé, est disposé dans un four sous vide ou sous atmosphère de gaz neutre. Un premier cycle thermique avec un palier de température est effectué typiquement à 1400°C pendant 5 à 10 minutes. Cette température est supérieure à la température du liquidus de la composition de la brasure (au moins 25°C au-dessus). L'ensemble est alors refroidi jusqu'à température ambiante à raison par exemple de 5°C par minute. L'assemblage CMC / AIN est sorti du four. Un cordon de brasure continu est observé entre le CMC et l'AIN. L'ensemble est nettoyé avec de l'acétone puis de l'éthanol avant le second brasage avec la première pièce intercalaire 3 et la pièce métallique 1. La première pièce intercalaire 3 est en en alliage de base Ni de type "Inconel 625" la pièce métallique 1 est en alliage de base Ni de type "Hastelloy X". La pièce CMC 7, le cordon de la deuxième composition de brasure 6 et les bords de la pièce 5 en AIN sont recouverts d'une suspension dite anti-mouillant, non mouillable par la première composition de brasure de type NiFeCrSiTi. Cette dernière est appliquée sous forme de ruban sur l'AIN. Par-dessus ce ruban de brasure, la première pièce intercalaire 3 est déposée. Cette pièce 3 est ensuite recouverte d'un ruban de brasure de type NiFeCrSiTi puis de la pièce métallique 1. Les bords des pièces 1 et 3 peuvent être revêtus d'anti-mouillant non mouillable par la composition de brasure NiFeCrSiTi. Pour la première pièce intercalaire 3, ce revêtement anti-mouillant dépend de la forme de cette pièce. L'ensemble CMC / brasure ZrSi₂-Si / AIN / brasure NiFeCrSiTi / alliage de base Ni/brasure NiFeCrSiTi / alliage de base Ni, prêt à être brasé, est disposé dans un four sous vide ou sous atmosphère de gaz neutre. Un second cycle thermique est effectué avec un palier de température à 1100°C pendant 30 minutes puis un second palier à 1250°C pendant 15 minutes. Cette température de 1250°C est supérieure à la température du liquidus de la composition de brasure NiFeCrSiTi (au moins 25°C au dessus). L'ensemble est alors refroidi jusqu'à température ambiante à raison, par exemple, de 5°C par minute.

Selon un deuxième exemple d'assemblage selon l'invention, la deuxième composition de brasure 6 utilisée dans le premier exemple donné ci-dessus, est remplacée par un mélange eutectique de PrSi₂ et de Si. Dans ce cas, Le procédé d'assemblage des pièces métallique 1 et céramique 7 comprend un seul cycle thermique de montée et descente en température, qui comprend essentiellement les étapes suivantes :
- la deuxième composition de brasure 6 est disposée sur les surfaces à assembler de la pièce en matériau céramique 7 et de la deuxième pièce intercalaire 5 ; et la première composition de brasure 2 est disposée sur les surfaces à assembler des première et deuxième pièces intercalaires 3 et 5 et de la pièce métallique 1; et
- l'ensemble ainsi formé (pièces 5, 7, 3 et 1, compositions 2 et 6) est monté en température au-delà des températures de liquidus des première et deuxième compositions de brasure 6 et 2, puis l'ensemble est refroidi.

Voici un exemple détaillé d'un tel procédé : Les surfaces des pièces 1, 3, 5 et 7 à assembler sont dégraissées dans un solvant organique par exemple du type acétone, ester, éther, alcool ou un mélange de ceux-ci. Les surfaces des parties des pièces CMC 7 et AIN 5 en vis à vis sont recouvertes de carbone nécessaire au bon mouillage de ces surfaces par la composition de brasure PrSi₂-Si. Le carbone peut être appliqué : 1) sous forme de poudre de graphite mélangée ou non par un liant organique, 2) par des techniques de dépôt du type dépôt chimique en phase vapeur ou CVD (pour "chemical vapor déposition") ou dépôt physique en phase vapeur ou PVD (pour "physical vapor déposition"), 3) tout simplement en frottant les surfaces avec une mine en graphite (par exemple une mine de crayon de papier). L'épaisseur de carbone recommandée est de l'ordre de 1 micromètre. Une fois que la couche de carbone a été appliquée sur toutes ces surfaces, on dispose la suspension de la deuxième composition de brasure formée du mélange eutectique PrSi₂-Si entre la pièce CMC 7 et la pièce AIN 5. Les parties au voisinage du joint sont recouvertes d'une suspension dite anti-mouillant non mouillable par ladite composition. Cette suspension évite l'écoulement de la brasure hors du joint CMC / AIN. L'AIN est recouvert d'un ruban de brasure de type NiFeCrSiTi. Par-dessus ce ruban de brasure, la première pièce intercalaire 3 en alliage de base Ni est mise en place. Cette pièce 3 est ensuite recouverte d'un ruban de brasure de type NiFeCrSiTi puis de la pièce métallique en "Hastelloy X" massive. Les bords des pièces en alliage métallique 1 et 3 peuvent être revêtus d'anti-mouillant, non mouillable par la composition NiFeCrSiTi. Pour la première pièce intercalaire 3, ce revêtement anti-mouillant dépend de la forme de cette pièce. L'ensemble CMC / brasure PrSi₂-Si / AIN / brasure NiFeCrSiTi / alliage de base Ni / brasure NiFeCrSiTi / alliage de base Ni, prêt à être brasé, est disposé dans un four sous vide (ou sous atmosphère de gaz neutre). Un unique cycle thermique est effectué avec un palier de température à 1100°C pendant 30 min. puis un second palier à 1250°C pendant 15 min. Cette température de 1250°C est supérieure à la température du liquidus de la brasure de type NiFeCrSiTi et à celle de la deuxième composition de brasure PrSi₂-Si (au moins 25°C au-dessus). L'ensemble est alors refroidi jusqu'à température ambiante à raison, par exemple, de 5°C par minute.

Selon un troisième exemple d'assemblage selon l'invention, la deuxième pièce intercalaire en AIN brasée soit avec ZrSi₂-Si (dans le premier exemple) soit avec PrSi₂-Si (dans le deuxième exemple), est remplacée par une pièce 5 en mullite.

Selon un quatrième exemple d'assemblage selon l'invention la deuxième pièce intercalaire en AIN des exemples précédents, est remplacée par une pièce 5 en mullite et on effectue une métallisation de la face de cette pièce 5 tournée vers la pièce 3. Cette métallisation est réalisée avec une composition de brasure connue sous la marque "TiCuSil" comprenant en pourcentages massiques environ 68,8% de Ag, 26,7% de Cu et 4,5% de Ti. Une autre composition de brasure à base de palladium Pd et de Ni, comprenant de préférence, en proportions atomiques, entre 35 et 55% de Pd et un solde en Ni (c'est-à-dire entre 50 et 69% de Pd et entre 50 et 31% de Ni en pourcentages massiques), peut alors être utilisée pour assembler entre elles les première et deuxième pièces intercalaires 3 et 5 et pour assembler aussi la pièce métallique avec la première pièce intercalaire. Dans ce cas, le procédé d'assemblage des pièces métallique 1 et céramique 7 comprend deux cycles thermiques et une étape supplémentaire de métallisation entre le premier brasage de la pièce en matériau céramique 7 avec la deuxième pièce intercalaire 5 et le brasage complet de l'assemblage.

Selon un cinquième exemple d'assemblage selon l'invention, la pièce métallique en alliage à base de Ni utilisée dans le premier exemple donné ci-dessus, est remplacée par une pièce métallique 1 en alliage à base de Co, par exemple l'alliage connu sous la marque "Haynes 188" et comprenant, typiquement, en pourcentages en poids : 20 à 24% de Ni, 20 à 24% de Cr, 13 à 15% de W, au plus 3% de Fe, 0,2 à 0,5% de Si, au plus 1,25% de Mn, 0,5 à 0,15% de C, au moins 0,015% de B, 0,02 à 0,12% de La, et un solde en Co. Dans ce cas, le procédé d'assemblage des pièces métallique 1 et céramique 7 comprend deux cycles thermiques avec un premier cycle de montée et descente en température avec un palier à 1400°C pendant 5 à 10 min. et un second cycle avec un palier à 1250°C pendant 15 min.

Dans les exemples précités, la première pièce intercalaire 3 peut présenter une structure massive, comme représenté sur la figure 1. Cette pièce 3 est alors en matériau suffisamment ductile pour se déformer et compenser l'écart de dilatation entre les pièces métalliques et céramiques. Bien entendu, les dimensions de cette première pièce intercalaire 3 et, en particulier, son épaisseur, doivent être suffisantes pour que cette pièce puisse jouer son rôle. A titre d'exemple, pour une pièce en matériau céramique 7 et une pièce métallique 1 toutes deux cylindriques de révolution, de 10 mm de diamètre et de 5mm d'épaisseur, on choisit la première pièce intercalaire 3 avec une forme cylindrique de révolution de 10 mm de diamètre et de 2 mm d'épaisseur et, la première pièce intercalaire également de forme cylindrique de révolution de 10 mm de diamètre et de 1 mm d'épaisseur.

Selon un autre mode de réalisation de la première pièce intercalaire 3, celle-ci est réalisée avec une structure déformable. Dans ce cas, cette pièce 3 n'est pas nécessairement réalisée en alliage ductile. A titre d'exemple, on peut réaliser cette pièce 3 en alliage de type "Inconel 601" (marque déposée) comprenant typiquement, en pourcentages en poids, 1 à 1,7% d'AI, au plus 0,1% de C, 21 à 25% de Cr, au plus 1% de Cu, au plus 1% de Mn, 58 à 63% de Ni, au plus 0,5% de Si, au plus 0,015% de S, et un solde en Fe.

Un exemple de première pièce intercalaire 3 à structure déformable est représenté sur la figure 2. Cette pièce est formée d'une nappe 3 déformable présentant des zones en méplat 11, 15 brasées et des zones inclinées 10 qui se succèdent pour former des ondulations concentriques. La nappe 3 comporte une zone en méplat intérieure 11, sensiblement circulaire autour d'un axe A, une zone en méplat 15 extérieure sensiblement annulaire, coaxiale à la zone intérieure 11, et de diamètre intérieur supérieur au diamètre de ladite zone intérieure, et au moins une zone en méplat 13 intercalaire, annulaire, située entre les zones 11 et 15 et coaxiales à celles-ci. Ces zones 11, 13, 15 sont reliées entre elles par des zones inclinées 10 présentant une symétrie de révolution par rapport à l'axe A. La zone en méplat intérieure 11 est brasée à la pièce métallique 1 tandis que la zone en méplat extérieure 15 est brasée à la deuxième pièce intercalaire 5 ou inversement. Les ondulations intercalaires (formées par les zones 10 et 13) restent libres.

Selon un autre exemple de réalisation, non représenté, la pièce intercalaire 3 est formée par plusieurs rubans repliés en accordéon et agencés radialement autour d'un point fixe, de préférence central. Ces rubans sont agencés selon plusieurs directions radiales autour dudit point fixe, ce qui constitue une disposition d'ondulations concentriques.

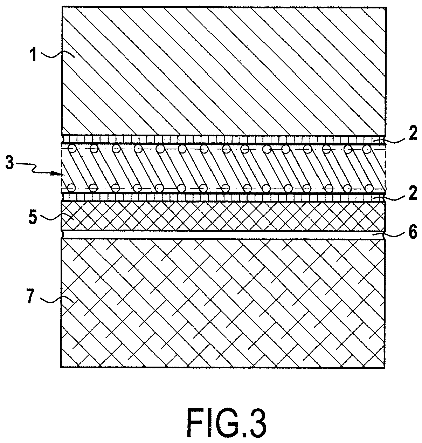

Selon un autre exemple représenté sur la figure 3, la structure déformable est constituée de plusieurs pièces dont un ressort en spirale 3 disposé en cercle dont le plan principal est sensiblement parallèle aux surfaces des pièces 1 et 5 à assembler, de sorte que ces surfaces reposent sur les faces latérales du ressort. Cette structure peut également comprendre au moins un ressort en spirale de forme rectiligne, disposé au centre du ressort circulaire 3 (non visible sur la figure 3), dont l'axe est parallèle auxdites surfaces.

L'assemblage de l'invention peut être mis en oeuvre dans une turbomachine et, plus particulièrement, dans un turboréacteur.

Ainsi, l'invention peut concerner une tuyère de turbomachine comportant au moins un assemblage tel que mentionné ci-dessus, dans laquelle la pièce métallique est un carter ou un levier de cette tuyère et la pièce en matériau céramique est un volet de cette tuyère.

L'invention concerne aussi une chambre de combustion de turbomachine comportant au moins un assemblage tel que mentionné ci-dessus, dans lequel ladite pièce métallique est un carter, un joint ou, de manière générale, une pièce constitutive de cette chambre, et ladite pièce en matériau céramique est une autre pièce constitutive de cette chambre.

L'invention concerne également un équipement de post-combustion d'une turbomachine comportant au moins un assemblage tel que mentionné ci-dessus, dans lequel la pièce métallique est un carter de post-combustion ou une plateforme, et la pièce en matériau céramique est un bras accroche-flammes.

## Revendications

1. Assemblage entre une pièce métallique (1) et une pièce en matériau céramique (7) réalisée en un matériau céramique à base de SiC et/ou de C, **caractérisé en ce qu'**il comporte une structure empilée comprenant les éléments suivants assemblés deux à deux, dans cet ordre, par brasage :
- ladite pièce métallique (1) ;
- une première pièce intercalaire (3);
- une deuxième pièce intercalaire (5) en AIN ou en mullite, chimiquement moins réactif vis-à-vis des métaux que SiC ou C, qui présente un coefficient de dilatation inférieur à celui du matériau constitutif de ladite pièce métallique (1); et
- ladite pièce en matériau céramique (7),
dans lequel :
- la première pièce intercalaire (3) est métallique et apte à se déformer pour compenser l'écart de dilatation entre ladite pièce métallique (1) et la deuxième pièce intercalaire (5).

2. Assemblage selon la revendication 1, dans lequel ladite pièce en matériau céramique (7) est en SiC massif.

3. Assemblage selon la revendication 1, dans lequel ladite pièce en matériau céramique (7) est en matériau composite à matrice céramique.

4. Assemblage selon la revendication 3, dans lequel ledit matériau composite comprend une matrice à base de SiC et/ou de C, renforcée par des fibres de SiC et/ou de C.

5. Assemblage selon l'une quelconque des revendications 1 à 4, dans lequel ladite pièce métallique (1) est en alliage à base de Ni ou à base de Co.

6. Assemblage selon l'une quelconque des revendications 1 à 5, dans lequel la première pièce intercalaire (3) est en Ni ou en alliage à base de Ni, ou en Co, ou en alliage à base de Co.

7. Assemblage selon l'une quelconque des revendications 1 à 6, dans lequel une première composition de brasure (2) est utilisée pour assembler la première pièce intercalaire (3) à la pièce métallique (1) et/ou à la deuxième pièce intercalaire (5), cette première composition étant à base de Ni et comprenant une proportion atomique de Ti inférieure à ou de l'ordre de 10%, et cette première composition comprenant, de préférence, les éléments suivants : Fe, Cr et Si.

8. Assemblage selon la revendication 7, dans lequel ladite première composition de brasure (2) comprend, en pourcentages atomiques : entre 3 et 6% de Ti lorsque la deuxième pièce intercalaire (5) est en AIN, et entre 6 et 10% de Ti lorsque la deuxième pièce intercalaire (5) est en mullite.

9. Assemblage selon l'une quelconque des revendications 1 à 6, dans lequel une première composition de brasure (2) est utilisée pour assembler la première pièce intercalaire (3) à la pièce métallique (1) et/ou à la deuxième pièce intercalaire (5), cette première composition étant à base de Pd et de Ni.

10. Assemblage selon l'une quelconque des revendications 1 à 9, dans lequel une deuxième composition de brasure (6) est utilisée pour assembler la deuxième pièce intercalaire (5) en AIN ou en mullite à la pièce en matériau céramique (7) à base de SiC et/ou de C, cette deuxième composition étant à base de Si.

11. Assemblage selon la revendication 10, dans lequel ladite deuxième composition de brasure (6) comprend essentiellement, en pourcentages atomiques : 60% à 97% de Si et 40 à 3% de Zr et, de préférence, consiste en un mélange eutectique de ZrSi₂ et de Si.

12. Assemblage selon la revendication 10, dans lequel ladite deuxième composition de brasure (6) comprend essentiellement, en pourcentages atomiques : 78% à 97% de Si et 22 à 3% de Pr et, de préférence, consiste en un mélange eutectique de PrSi₂ et de Si.

13. Assemblage selon l'une quelconque des revendications 1 à 12, dans lequel ladite première pièce intercalaire (3) est composée d'une couche de matériau métallique ductile.

14. Assemblage selon l'une quelconque des revendications 1 à 12, dans lequel ladite première pièce intercalaire (3) comporte une structure déformable.

15. Assemblage selon la revendication 14, dans lequel ladite structure déformable est formée d'une nappe déformable présentant des zones déformables, par exemple sous forme d'ondulations concentriques, et des zones en méplat brasées.

16. Procédé de réalisation d'un assemblage selon l'une quelconque des revendications 1 à 15, dans lequel, selon une première étape, on brase ensemble ladite pièce céramique (7) et la deuxième pièce intercalaire (5) à l'aide d'une deuxième composition de brasure (6) et en ce que, selon une deuxième étape, on brase ensemble la deuxième pièce intercalaire (5), la première pièce intercalaire (3) et ladite pièce métallique (1) à l'aide d'une première composition de brasure (2) ayant une température de fusion inférieure à celle de la deuxième composition de brasure (6).

17. Procédé de réalisation d'un assemblage selon l'une quelconque des revendications 1 à 15, dans lequel on brase ensemble, en une unique étape, ladite pièce céramique (7), la deuxième pièce intercalaire (5), la première pièce intercalaire (3) et ladite pièce métallique (1).

18. Turbomachine comportant au moins un assemblage selon l'une quelconque des revendications 1 à 15.

19. Tuyère de turbomachine comportant au moins un assemblage selon l'une quelconque des revendications 1 à 15, dans lequel ladite pièce métallique (1) est un carter ou un levier de cette tuyère, et ladite pièce en matériau céramique (7) est un volet de cette tuyère.

20. Chambre de combustion de turbomachine comportant au moins un assemblage selon l'une quelconque des revendications 1 à 15, dans lequel ladite pièce métallique (1) est un carter, un joint ou une pièce constitutive de cette chambre, et ladite pièce en matériau céramique (7) est une autre pièce constitutive de cette chambre.

21. Equipement de post-combustion d'une turbomachine comportant au moins un assemblage selon l'une quelconque des revendications 1 à 15, dans lequel ladite pièce métallique (1) est un carter de post-combustion ou une plateforme, et la pièce en matériau céramique (7) est un bras accroche-flammes.

## Patentansprüche

1. Verbindung zwischen einem Metallteil (1) und einem Teil aus Keramikwerkstoff (7), das aus einem Keramikwerkstoff auf der Basis von SiC und/oder C hergestellt ist, **dadurch gekennzeichnet, dass** sie eine gestapelte Struktur umfasst, welche die folgenden, in dieser Reihenfolge paarweise verlöteten Elemente umfasst:
- das Metallteil (1),
- ein erstes Zwischenstück (3),
- ein zweites Zwischenstück (5) aus AIN oder aus Mullit, chemisch weniger reaktionsfreudig gegenüber Metallen als SiC oder C, das einen geringeren Ausdehnungskoeffizienten als der das Metallteil (1) bildende Werkstoff aufweist, und
- das Teil aus Keramikwerkstoff (7),
bei der:
- das erste Zwischenstück (3) metallisch und geeignet ist, sich zu verformen, um den Ausdehnungsunterschied zwischen dem Metallteil (1) und dem zweiten Zwischenstück (5) auszugleichen.

2. Verbindung nach Anspruch 1, bei der das Teil aus Keramikwerkstoff (7) aus massivem SiC besteht.

3. Verbindung nach Anspruch 1, bei der das Teil aus Keramikwerkstoff (7) aus Keramikmatrix-Verbundwerkstoff besteht.

4. Verbindung nach Anspruch 3, bei der der Verbundwerkstoff eine Matrix auf Basis von SiC und/oder von C, die durch SiC- und/oder C-Fasern verstärkt ist, umfasst.

5. Verbindung nach einem der Ansprüche 1 bis 4, bei der das Metallteil (1) aus Legierung auf Basis von Ni oder auf Basis von Co besteht.

6. Verbindung nach einem der Ansprüche 1 bis 5, bei der das erste Zwischenstück (3) aus Ni oder aus Legierung auf Basis von Ni oder aus Co oder aus Legierung auf Basis von Co besteht.

7. Verbindung nach einem der Ansprüche 1 bis 6, bei der eine erste Lötzusammensetzung (2) verwendet wird, um das erste Zwischenstück (3) mit dem Metallteil (1) und/oder mit dem zweiten Zwischenstück (5) zu verbinden, wobei diese erste Zusammensetzung auf Basis von Ni ist und einen Atomanteil von Ti von weniger als oder in der Größenordnung von 10 % umfasst, und wobei diese erste Zusammensetzung vorzugsweise die folgenden Elemente umfasst: Fe, Cr und Si.

8. Verbindung nach Anspruch 7, bei der die erste Lötzusammensetzung (2) in Atomprozent umfasst: zwischen 3 und 6 % Ti, wenn das zweite Zwischenstück (5) aus AIN besteht, und zwischen 6 und 10 % Ti, wenn das zweite Zwischenstück (5) aus Mullit besteht.

9. Verbindung nach einem der Ansprüche 1 bis 6, bei der eine erste Lötzusammensetzung (2) verwendet wird, um das erste Zwischenstück (3) mit dem Metallteil (1) und/oder mit dem zweiten Zwischenstück (5) zu verbinden, wobei diese erste Zusammensetzung auf Basis von Pd und Ni ist.

10. Verbindung nach einem der Ansprüche 1 bis 9, bei der eine zweite Lötzusammensetzung (6) verwendet wird, um das zweite Zwischenstück (5) aus AIN oder aus Mullit mit dem Teil aus Keramikwerkstoff (7) auf Basis von SiC und/oder von C zu verbinden, wobei diese zweite Zusammensetzung auf Basis von Si ist.

11. Verbindung nach Anspruch 10, bei der die zweite Lötzusammensetzung (6) in Atomprozent im Wesentlichen umfasst: 60 % bis 97 % Si und 40 bis 3 % Zr, und vorzugsweise aus einer eutektischen Mischung aus ZrSi₂ und Si besteht.

12. Verbindung nach Anspruch 10, bei der die zweite Lötzusammensetzung (6) in Atomprozent im Wesentlichen umfasst: 78 % bis 97 % Si und 22 bis 3 % Pr, und vorzugsweise aus einer eutektischen Mischung aus PrSi₂ und Si besteht.

13. Verbindung nach einem der Ansprüche 1 bis 12, bei der das erste Zwischenstück (3) aus einer Schicht aus duktilem metallischem Werkstoff besteht.

14. Verbindung nach einem der Ansprüche 1 bis 12, bei der das erste Zwischenstück (3) eine verformbare Struktur umfasst.

15. Verbindung nach Anspruch 14, bei der die verformbare Struktur von einer verformbaren Lage, die verformbare Bereiche, zum Beispiel in Form von konzentrischen Wellen, sowie angelötete abgeflachte Bereiche aufweist, gebildet ist.

16. Verfahren zur Herstellung einer Verbindung nach einem der Ansprüche 1 bis 15, bei dem in einem ersten Schritt das Keramikteil (7) und das zweite Zwischenstück (5) mit Hilfe einer zweiten Lötzusammensetzung (6) zusammengelötet werden und bei dem in einem zweiten Schritt das zweite Zwischenstück (5), das erste Zwischenstück (3) und das Metallteil (1) mit Hilfe einer ersten Lötzusammensetzung (2), welche eine niedrigere Schmelztemperatur als die zweite Lötzusammensetzung (6) aufweist, zusammengelötet werden.

17. Verfahren zur Herstellung einer Verbindung nach einem der Ansprüche 1 bis 15, bei dem in einem einzigen Schritt das Keramikteil (7), das zweite Zwischenstück (5), das erste Zwischenstück (3) und das Metallteil (1) zusammengelötet werden.

18. Turbomaschine, umfassend wenigstens eine Verbindung nach einem der Ansprüche 1 bis 15.

19. Düse einer Turbomaschine, umfassend wenigstens eine Verbindung nach einem der Ansprüche 1 bis 15, bei der das Metallteil (1) ein Gehäuse oder ein Hebel dieser Düse ist und das Teil aus Keramikwerkstoff (7) eine Klappe dieser Düse ist.

20. Brennkammer einer Turbomaschine, umfassend wenigstens eine Verbindung nach einem der Ansprüche 1 bis 15, bei der das Metallteil (1) ein Gehäuse, eine Dichtung oder ein Bestandteil dieser Kammer ist und das Teil aus Keramikwerkstoff (7) ein weiterer Bestandteil dieser Kammer ist.

21. Nachverbrennungseinrichtung einer Turbomaschine, umfassend wenigstens eine Verbindung nach einem der Ansprüche 1 bis 15, bei der das Metallteil (1) ein Nachverbrennungsgehäuse oder eine Plattform ist und das Teil aus Keramikwerkstoff (7) ein Flammenhalterarm ist.

## Claims

1. An assembly between a metal piece (1) and a ceramic material piece (7) made of a SiC and/or C based ceramic material, the assembly being **characterized in that** it comprises a stack structure comprising the following elements assembled together in pairs in this order, by brazing:
• said metal piece (1);
• a first intermediate piece (3);
• a second intermediate piece (5) made of AlN or of mullite, that is chemically less reactive relative to metals than are SiC or C, and that presents a coefficient of expansion smaller than that of the material constituting said metal piece (1); and
• said ceramic material piece (7);
in which:
• the first intermediate piece (3) is made of metal and is suitable for deforming to compensate for the expansion difference between said metal piece (1) and the second intermediate piece (5).

2. An assembly according to claim 1, wherein said ceramic material piece (7) is made of solid SiC.

3. An assembly according to claim 1, wherein said ceramic material piece (7) is made of ceramic matrix composite material.

4. An assembly according to claim 3, wherein said composite material comprises a matrix based on SiC and/or C, reinforced by fibers of SiC and/or C.

5. An assembly according to any one of claims 1 to 4, wherein said metal piece (1) is made of an alloy based on Ni or based on Co.

6. An assembly according to any one of claims 1 to 5, wherein the first intermediate piece (3) is made of Ni or of an alloy based on Ni, or of Co, or of an alloy based on Co.

7. An assembly according to any one of claims 1 to 6, in which a first brazing composition (2) is used for assembling the first intermediate piece (3) to the metal piece (1), and/or to the second intermediate piece (5), said first composition being based on Ni and including an atomic percentage of Ti less than or approximately 10%, with said first composition preferably including the following elements: Fe, Cr, and Si.

8. An assembly according to claim 7, wherein said first brazing composition (2) comprises, in atomic percentages: 3% to 6% Ti when the second intermediate piece (5) is made of AlN; and 6% to 10% Ti when the second intermediate piece (5) is made of mullite.

9. An assembly according to any one of claims 1 to 6, wherein a first brazing composition (2) is used for assembling the first intermediate piece (3) to the metal piece (1) and/or to the second intermediate piece (5), said first composition being based on Pd and Ni.

10. An assembly according to any one of claims 1 to 9, wherein a second brazing composition (6) is used for assembling the second intermediate piece (5) made of AlN or of mullite to the ceramic material piece (7) based on SiC and/or C, said second composition being based on Si.

11. An assembly according to claim 10, wherein said second brazing composition (6) essentially comprises, in atomic percentages: 60% to 97% Si, and 40% to 3% Zr, and preferably consists in a eutectic mixture of ZrSi₂ and of Si.

12. An assembly according to claim 10, wherein said second brazing composition (6) essentially comprises, in atomic percentages: 78% to 97% Si; and 22% to 3% Pr; and preferably consists in a eutectic mixture of PrSi₂ and of Si.

13. An assembly according to any one of claims 1 to 12, wherein said first intermediate piece (3) is made of a layer of ductile metal material.

14. An assembly according to any one of claims 1 to 12, wherein said first intermediate piece (3) comprises a deformable structure.

15. An assembly according to claim 14, wherein said deformable structure is made of a deformable sheet presenting deformable zones, e.g. in the form of concentric undulations, together with flat zones that are brazed.

16. A method of making an assembly according to any one of claims 1 to 15, wherein, in a first step, said ceramic piece (7) and the second intermediate piece (5) are brazed together with the help of a second brazing composition (6), and wherein, in a second step, the second intermediate piece (5), the first intermediate piece (3), and the metal piece (1) are brazed together with the help of a first brazing composition (2) having a melting temperature lower than that of the second brazing composition (6).

17. A method of making an assembly according to any one of claims 1 to 15, wherein said ceramic piece (7), the second intermediate piece (5), the first intermediate piece (3), and said metal piece (1) are brazed together in a single step.

18. A turbomachine including at least one assembly according to any one of claims 1 to 15.

19. A turbomachine nozzle comprising at least one assembly according to any one of claims 1 to 15, in which said metal piece (1) is a casing or a lever of said nozzle, and said ceramic material piece (7) is a flap of said nozzle.

20. A turbomachine combustion chamber including at least one assembly according to any one of claims 1 to 15, in which said metal piece (1) is a casing, a gasket, or a component part of said chamber, and said ceramic material piece (7) is another component part of said chamber.

21. Post-combustion equipment of a turbomachine including at least one assembly according to any one of claims 1 to 15, in which said metal piece (1) is a post-combustion casing or a platform, and the ceramic material piece (7) is a flame-holder arm.
